# EUROPEAN PATENT APPLICATION

(11) **EP 4 651 277 A1**
(43) Date of publication of application: **19.11.2025**
(21) Application number: 24890197.7
(22) Date of filing: 02.08.2024
(51) Int. Cl.: H01M 50/152, H01M 50/342, H01M 50/636

(54) **BATTERY COVER PLATE STRUCTURE**

(30) Priority: 13.11.2023 CN 202311501017
(71) Applicant: Wanxiang A123 Systems Corp., Hangzhou, Zhejiang 311215 (CN)
(72) Inventor: SU, Wenjun, Hangzhou, Zhejiang 311215 (CN); CHENG, Sheng, Hangzhou, Zhejiang 311215 (CN); WANG, Huimin, Hangzhou, Zhejiang 311215 (CN); LU, Jiating, Hangzhou, Zhejiang 311215 (CN); ZHAO, Chuang, Hangzhou, Zhejiang 311215 (CN)
(86) International application number: PCT/CN2024/109402
(87) International publication number: WO 2025/102833

(57) **Abstract**

The disclosure provides a battery cover plate structure, which includes an inner explosion-proof groove. The inner explosion-proof groove is annularly distributed on a back surface of a cover plate. The back surface of the cover plate is provided with a plurality of inner liquid injection holes distributed circumferentially along the cover plate. An outer explosion-proof groove is provided on a back surface of the inner explosion-proof groove, the outer explosion-proof groove is annularly distributed. An explosion-proof scribe line is provided at a center of the outer explosion-proof groove, a front surface of the cover plate is provided with a plurality of outer liquid injection holes circumferentially distributed along the cover plate; and the plurality of inner liquid injection holes are in one to one correspondence to the plurality of outer liquid injection holes. Explosion-proof grooves are arranged on both the front and back surfaces, which can effectively protect the explosion-proof scribe line and avoid damage to the explosion-proof scribe lines caused by external forces encountered during processing, transportation or use of the cover plate or the battery. The explosion-proof scribe line can avoid cracks caused by an original V-shaped sharp corner during processing of the explosion-proof scribe line, and improve processing stability of the explosion-proof scribe line.

## Description

### TECHNICAL FIELD

The disclosure relates to the field of battery cover plates, in particular to a battery cover plate structure optimized in terms of explosion-proof scribe lines and liquid injection holes.

### BACKGROUND ART

An explosion-proof scribe line mentioned in the disclosure is a structural design on a cover plate of a commonly used cylindrical lithium battery. Generally, a cross section of the explosion-proof scribe line is V-shaped, with a main function that when an internal pressure of a battery cell increases, a relative pressure at a position corresponding to the scribe line is largest relative to a whole plane of the cover plate, and it is most likely to deform and then rupture, so as to achieve a purpose of directional pressure relief, thus avoiding a sudden rise of the internal pressure of the battery cell, resulting in radial explosion or thermal runaway of the whole battery cell. It is mentioned in a published Chinese patent publication No. CN218996893U entitled "New Battery Cover Plate Structure and Cylindrical Lithium Battery" that by providing explosion-proof scribe lines, when the pressure inside the battery is too high, the pressure is relieved to prevent the whole cover plate from flying out. It is mentioned in a published Chinese patent publication No. CN218731353U entitled "Battery Cover Plate and Cylindrical Battery" that an inner cover plate and an outer cover plate are designed, and the inner cover plate is provided with an explosion-proof nick. Main benefits of this patent are that the inner cover plate with a nick structure can not only ensure that a housing is welded to seal the battery after electrolyte is injected, but also ensure that the inner cover plate can be broken after an internal pressure exceeds a certain value, so as to relief the pressure inside the housing, that is, to avoid the thermal runaway of the battery. Although concept of the explosion-proof scribe line is mentioned, its specific structure is not disclosed. Existing technical schemes can be summarized as solving a problem of timely pressure relief when the internal pressure of the battery is too high by providing the explosion-proof scribe lines, but not deeply optimizing design of the explosion-proof scribe lines to solve problems of stability and timely opening of the explosion-proof scribe lines.

### SUMMARY

An object of the disclosure is to solve problems of poor stability of explosion-proof scribe lines and unreasonable design of a battery cover plate structure in related art, and provide a battery cover plate structure, which has advantages of ensuring stability of the explosion-proof scribe lines, ensuring tightness of the battery and preventing the battery from electrolyte leaking.

In order to solve the above technical problems, the disclosure adopts a technical scheme that a battery cover plate structure includes an inner explosion-proof groove. The inner explosion-proof groove is annularly distributed on a back surface of a cover plate. The back surface of the cover plate is provided with a plurality of inner liquid injection holes distributed circumferentially along the cover plate. An outer explosion-proof groove is provided on a back surface of the inner explosion-proof groove, the outer explosion-proof groove is annularly distributed. An explosion-proof scribe line is provided at a center of the outer explosion-proof groove, a front surface of the cover plate is provided with a plurality of outer liquid injection holes circumferentially distributed along the cover plate; and the plurality of inner liquid injection holes are in one to one correspondence to the plurality of outer liquid injection holes. The front surface and the back surface of the cover plate are each provided with the explosion-proof groove, and an explosion-proof scribe line is provided at a center of the outer explosion-proof groove. Explosion-proof grooves are arranged on both the front and back surfaces, which can effectively protect the explosion-proof scribe line and avoid damage to the explosion-proof scribe lines caused by external forces encountered during processing, transportation or use of the cover plate or the battery. A depth of the explosion-proof scribe line is set to be one fifth to two-thirds of a thickness of the explosion-proof groove, which can be adjusted according to needs in actual design of a battery cells. The explosion-proof scribe line can avoid cracks caused by an original V-shaped sharp corner during processing of the explosion-proof scribe line, and improve processing stability of the explosion-proof scribe line.

Preferably, the depth of the explosion-proof scribe line is less than a thickness of the outer explosion-proof groove, a cross section of the explosion-proof scribe line is a U-shaped opening, an opening angle of the cross section of the explosion-proof scribe line is more than or equal to 10 degrees and less than or equal to 60 degrees, and a bottom end of the cross section of the explosion-proof scribe line is arc-shaped. U-shaped design of the explosion-proof scribe line can avoid the cracks caused by an original V-shaped sharp corner during processing of the explosion-proof scribe line, and improve processing stability of the explosion-proof scribe line.

Preferably, the front surface of the cover plate is provided with a welding groove, which is annular in shape and is closer to a center of the cover plate than the outer explosion-proof groove, the outer liquid injection hole is closer to the center of the cover plate than the welding groove, an opening of the welding groove faces the front surface of the cover plate, a depth of the welding groove is less than a thickness of the cover plate, and the welding groove can be set in a circular, semi-circular or segmented arc shape. The welding groove mainly functions in external laser penetration welding after the cover plate is assembled. A main purpose of the penetration welding is to weld a body of the cover plate to a current collecting plate inside the battery cell to achieve a function of electrical connection. The penetration welding can be made in a spot mode, continuous line mode or other modes. After welding, an external molten part is preferably not beyond an outer plane of the body of the cover plate.

Preferably, each of the plurality of inner liquid injection holes is closer to the center of the cover plate than the inner explosion-proof groove, a diameter of the inner liquid injection hole is larger than a diameter of the outer liquid injection hole, the outer liquid injection hole is inscribed in the inner liquid injection hole, and the inner liquid injection hole and the outer liquid injection hole integrally form a through hole, and a sum of thicknesses of the inner liquid injection hole and the outer liquid injection hole is equal to the thickness of the cover plate. An opening position of the inner liquid injection hole is on the back surface of the cover plate, and an opening position of the outer liquid injection hole is on the front surface of the cover plate. The diameter of the inner liquid injection hole is required to be larger than the diameter of the outer liquid injection hole. Relative positions of the inner and outer liquid injection holes, an area of the outer liquid injection hole is required to cover an area of the whole inner liquid injection hole. Numbers of inner and outer injection holes can be set according to design requirements. The inner and outer liquid injection holes integrally form the through hole, and a total thickness of the inner and outer liquid injection holes is equal to the thickness of the body of the cover plate for liquid injection operations.

Preferably, the front surface of the cover plate is provided with a liquid-injection-hole boss, the liquid-injection-hole boss is closer to the center of the cover plate than the welding groove, and the outer liquid injection hole is closer to the center of the cover plate than the liquid-injection-hole boss, and the liquid-injection-hole boss is annular as a whole, and a cross section of the liquid-injection-hole boss is a right-angled trapezoid in shape, and a hypotenuse of the right-angled trapezoid is located at a side close to the outer liquid injection hole, and a gap is left between the liquid-injection-hole boss and the outer liquid injection hole. An advantage of the design of the liquid-injection-hole boss is that it can effectively avoid the electrolyte from back sputtering around the injection holes with injection of electrolyte or increase in an injection speed in injecting the electrolyte, which affects final seal-welding effect and yield of the battery cell. The electrolyte is prone to remaining at inner edges of the liquid injection holes, and existence of the electrolyte may lead to failure of the whole seal-welding, or cause pores at the welding position, which may result in a risk of liquid leakage in subsequent use of the battery cell.

Preferably, a central welding groove is provided at a center of the front surface of the cover plate, a depth of the central welding groove is same as a depth of the welding groove, and the outer liquid injection hole is located at an outer side of the central welding groove. A main purpose of the central welding groove is to carry out the penetration welding here, so as to weld the body of the cover plate with a corresponding current collecting plate inside the battery cell. The penetration welding can be made in a spot mode, continuous line mode or other modes.

Preferably, an outer liquid injection hole circle is provided at the front surface of the cover plate, the outer liquid injection hole is inscribed in the outer liquid injection hole circle, the central welding groove and the outer liquid injection hole circle are concentric, and a diameter of the central welding groove is smaller than a diameter of the outer liquid injection hole circle.

Preferably, the cover plate is disc-shaped as a whole, and an edge groove is provided at an edge of the back surface of the cover plate, the edge groove is annular in shape and further away from the center of the cover plate than the inner explosion-proof groove. In order to match the housing of a cylindrical battery, a groove is provided on at an edge of a back surface of the body of the cover plate to match subsequent welding between housings.

Preferably, an annular inner wall of the liquid-injection-hole boss forms a truncated cone structure, and the truncated cone structure is provided with a sealing nail matched with the truncated cone structure, and an edge of the sealing nail is adapted to an edge of the truncated cone structure in shape, and a thickness of the sealing nail is less than a height of the liquid-injection-hole boss. By adding matching of the sealing nail, a welding yield of the liquid injection hole is improved, tightness of the battery cell is further ensured, and a risk of liquid leakage around the liquid injection hole caused by welding is avoided.

The integral cover plate provided in the disclosure has advantages that its structure is simple, which only includes two metal parts, namely the body of the cover plate and the sealing nail, instead of an assembly. The body of the cover plate is simple in processing operation and can be integrally formed by stamping, thus improving assembly efficiency and reducing production cost.

Another beneficial effect of the disclosure is that a welding area between the body of the cover plate and the current collecting plate is greatly increased through design of the welding groove. In this way, overcurrent capacity of the battery cell can be improved under a condition of high rate and power input and output of the battery can be improved.

Another beneficial effect of the disclosure is that the design of the inner and outer liquid injection holes and the liquid-injection-hole boss proposed in the disclosure can greatly improve the final seal-welding effect and the yield of the battery cell. Pores or sealing defects in seal-welding caused by electrolyte residue can be avoided, so as to avoid a risk of liquid leakage in subsequent use of the battery.

Another beneficial effect of the disclosure is that design of double-sided explosion-proof grooves fully protect stability of the explosion-proof scribe line, and effectively avoid damage to the explosion-proof scribe lines caused by external forces encountered during processing, transportation or use of the cover plate or the battery.

Another beneficial effect of the disclosure is that the U-shaped explosion-proof scribe line can avoid the cracks caused by an original V-shaped sharp corner during processing of the explosion-proof scribe line, and improve processing stability of the explosion-proof scribe line.

### BRIEF DESCRIPTION OF THE DRAWINGS

FIG. 1 is a schematic sectional view of a battery cover plate according to the disclosure.
FIG. 2 is a schematic top view of a front surface of a battery cover plate according to the disclosure.
FIG. 3 is a schematic top view of a back surface of a battery cover plate according to the disclosure.
FIG. 4 is an enlarged schematic view at A in FIG. 1.
FIG. 5 is a schematic sectional view of the explosion-proof scribe line according to the disclosure.
FIG. 6 is a schematic top view of a sealing nail according to the disclosure.
FIG. 7 is a schematic sectional view of a sealing nail according to the disclosure.

Reference numbers in the figures are as follows: 1. Inner Explosion-proof Groove, 2. Outer Explosion-proof Groove, 3. Inner Liquid Injection Hole, 4. Outer Liquid Injection Hole, 5. Explosion-proof Scribe Line, 6. Welding Groove, 7. Liquid-Injection-Hole Boss, 8. External Liquid Injection Hole Circle, 9. Central Welding Groove, 10. Edge Groove, 11. Truncated Cone Structure, 12. Sealing Nail, A. Enlarged Sign, θ. Angle Sign, R. Radius Sign.

### DETAILED DESCRIPTION

Specific implementation of the technical scheme of the disclosure will be further illustrated by embodiments and in combination with the figures in the following.

### Embodiment 1

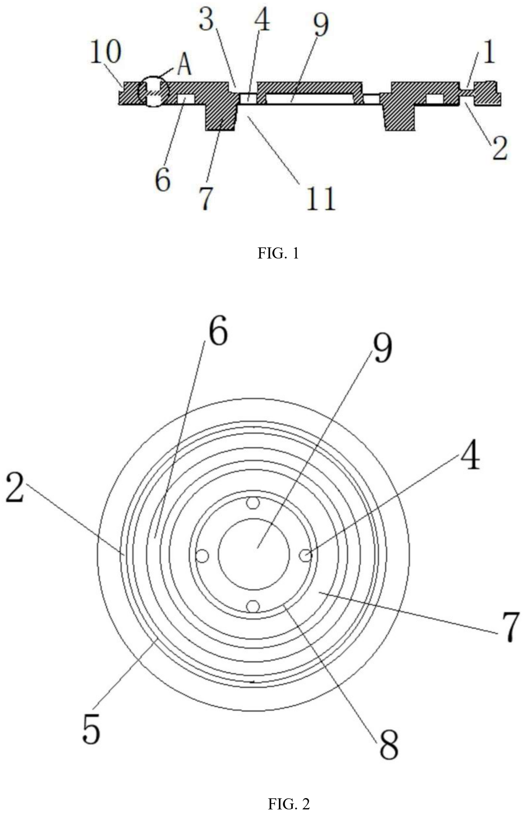

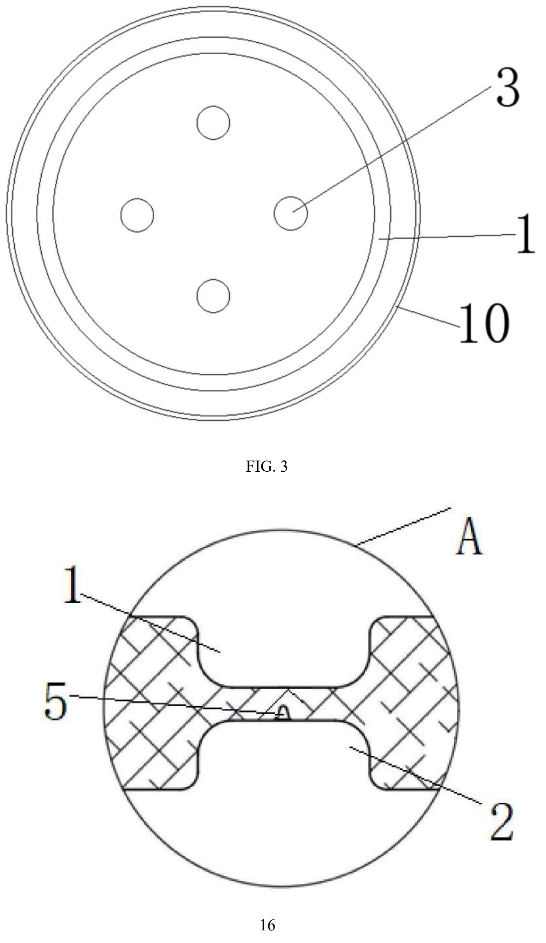

As shown in FIGS. 1 to 7, the disclosure provides a battery cover plate structure, which is specifically applied to a cylindrical battery in this embodiment as a cover plate of the cylindrical battery, which includes an inner explosion-proof groove 1, the inner explosion-proof groove 1 is provided on a back surface of the cover plate, and the inner explosion-proof groove 1 is annular as a whole, and the back surface of the cover plate is provided with a plurality of inner liquid injection holes 3 distributed circumferentially along the cover plate. In this embodiment, four inner liquid injection holes 3 are provided, and an outer explosion-proof groove 2 is provided on a back surface of the inner explosion-proof groove 1. The outer explosion-proof groove 2 is also annularly distributed, and the outer explosion-proof groove 2 and the inner explosion-proof groove 1 are on the front surface and the back surface respectively and correspond to each other. An explosion-proof scribe line 5 is provided at a center of the outer explosion-proof groove 2, a front surface of the cover plate is provided with a plurality of outer liquid injection holes 4 distributed circumferentially along the cover plate. In this embodiment, four outer liquid injection holes 3 are provided, and the plurality of inner liquid injection holes 3 are in one to one correspondence to the plurality of outer liquid injection holes 4. It should be noted that the battery cover plate according to the disclosure is covered on a cylindrical lithium battery, and the front surface and the back surface of the cover plate is defined with a battery cell in the lithium battery as reference. A surface facing the battery cell in the lithium battery is the back surface of the cover plate, and a surface away from the battery cell in the lithium battery is the front surface of the cover plate. This is defined because the cover plate is covered on the cylindrical lithium battery, and a surface which can be seen by a viewer is recorded as the front surface of the cover plate, that is, the back surface of the cover plate facing the battery cell. FIG. 1 is a schematic sectional view of the cover plate, an upper half of which is the back surface of the cover plate, that is, a surface of the cover plate facing the battery cell, a lower half of which is the front surface of the cover plate, that is, the back surface of the cover plate facing the battery cell, while FIG. 2 is a schematic top view of the front surface of the cover plate, and FIG. 3 is a schematic top view of the back surface of the cover plate. An edge groove 10 is provided at an outermost ring of the back surface of the cover plate, and the edge groove is annular in shape and forms a ring layer at the outermost ring on the back surface of the cover plate. This design is to match a housing of a cylindrical battery, a groove is provided on at an edge of a back surface of the body of the cover plate to match subsequent welding between housings. In addition to the edge groove 10, the back surface of the cover plate is further provided with an inner explosion-proof groove 1 at a position closer to a center of the cover plate, and the inner liquid injection hole 3 is closer to the center of the cover plate than the inner explosion-proof groove 1. Taking the back surface of the cover plate as an example, it can be understood that the inner explosion-proof groove 1 is at an outer ring, the inner liquid injection hole 3 is at an inner ring and the edge groove 10 is at the outermost ring. It can be seen from the front surface of the cover plate that the outer explosion-proof groove 2 is at the outermost ring, which is marked as a first ring for convenience of subsequent description, the explosion-proof scribe line 5 is arranged at a center of the outer explosion-proof groove 2, a welding groove 6 is closer to the center of the cover plate than the outer explosion-proof groove 2 and is marked as a second ring, a liquid-injection-hole boss 7 is closer to the center of the cover plate than the welding groove 6 and is marked as a third ring, an outer liquid injection hole circle 8 is closer to the center of the cover plate than the liquid-injection-hole boss 7 and is marked as a fourth ring, and a central welding groove 9 is located at the center of the cover plate and is marked as a fifth ring. It can be seen from FIG. 2 that the outer liquid injection holes 4 are regarded as being at centers of the fourth and fifth rings, the outer liquid injection holes 4 are inscribed in the outer liquid injection hole circle 8, and a gap is left between the outer liquid injection holes 4 and the central welding groove 9. Explosion-proof grooves are arranged on both the front and back surfaces of the cover plate, which can effectively protect the explosion-proof scribe line 5 and avoid damage to the explosion-proof scribe line 5 caused by external forces encountered during processing, transportation or use of the cover plate or the battery. Widths of the explosion-proof grooves can be set according to actual needs. In this embodiment, widths of the outer explosion-proof groove 2 and the inner explosion-proof groove 1 can be set to 2 mm, and an expression "annularly distributed" means that the outer explosion-proof groove 2 and the inner explosion-proof groove 1 are each a ring on the battery cover plate when viewed in the top view. In this embodiment, a thickness of the body of the cover body is set to 1.0 mm. In practical applications, a diameter of the cover plate can be selected as 18mm, 21mm, 26mm, 32mm, 46mm, 60 mm or other common sizes. In this embodiment, the size can be selected as 18 mm. The cover plate is disc-shaped as a whole, and an edge groove 10 is provided at an edge of the back surface of the cover plate, the edge groove 10 is annular in shape and further away from the center of the cover plate than the inner explosion-proof groove 1. The body of the cover plate is characterized by being made of common metal materials, including steel, aluminum, copper, or the like.

It can be seen from the sectional view of FIG. 1 that the front surface of the cover plate is provided with a liquid-injection-hole boss 7, the liquid-injection-hole boss 7 is closer to the center of the cover plate than the welding groove 6, and the outer liquid injection hole 4 is closer to the center of the cover plate than the liquid-injection-hole boss 7, and the liquid-injection-hole boss 7 is annular as a whole, and a cross section of the liquid-injection-hole boss 7 is a right-angled trapezoid in shape, and a hypotenuse of the right-angled trapezoid is located at a side close to the outer liquid injection hole 4, and a gap is left between the liquid-injection-hole boss 7 and the outer liquid injection hole 4. The liquid-injection-hole boss 7 is on the front surface of the cover plate, and the liquid-injection-hole boss 7 is formed by pulling along an edge of the outer liquid injection hole 4 in a direction away from the battery cell. Generally speaking, the liquid-injection-hole boss 7 can take any geometric shape according to actual production needs, but in the embodiment of the disclosure, the liquid-injection-hole boss 7 is annular in shape. An annular inner wall of the liquid-injection-hole boss 7 forms a truncated cone structure 11, and the truncated cone structure 11 is provided with a sealing nail 12 matched with the truncated cone structure, and an edge of the sealing nail 12 is adapted to an edge of the truncated cone structure 11 in shape, and a thickness of the sealing nail 12 is less than a height of the liquid-injection-hole boss 7.

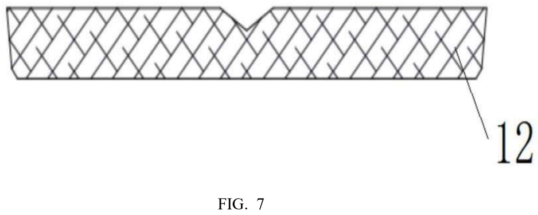

As shown in FIG. 7 and FIG. 1, an edge of the truncated cone structure 11 is a conical surface, and the whole truncated cone structure 11 is of an isosceles trapezoid when seen in the section view, and an edge of the corresponding sealing nail 12 also presents a conical design, and conical angles of the conical surface and the conical design are the same. Here, the conical angles refer to angles with a vertical direction, and a diameter of the conical surface of the truncated cone structure 11 gradually decreases from outside to inside. An expression "outside" here refers to a surface away from the cover plate, and an expression "inside" here refers to a surface close to the cover plate, and the diameter of the conical surface here refers to a diameter of the truncated cone structure 11. The conical angles can be set between 5 degrees and 30 degrees. In this embodiment, the conical angles are set to 30 degrees. The thickness of the sealing nail 12 is less than the height of the liquid-injection-hole boss 7, and an advantage of the design of the liquid-injection-hole boss 7 is that it can effectively avoid the electrolyte from back sputtering around the injection holes with injection of electrolyte or increase in an injection speed in injecting the electrolyte, which affects final seal-welding effect and yield of the battery cell. The electrolyte is prone to remaining at inner edges of the liquid injection holes, and existence of the electrolyte may lead to failure of the whole seal-welding, or cause pores at the welding position, which may result in a risk of liquid leakage in subsequent use of the battery cell. In this embodiment, a diameter of the inner liquid injection hole 3 is 3 mm, and a diameter of the outer liquid injection hole 4 is 2 mm. There are four inner liquid injection holes 3 and four outer liquid injection holes 4, which are distributed evenly and circumferentially along the cover plate. The inner liquid injection hole 3 and the outer liquid injection hole 4 are tangent to each other in a direction toward the center of the cover plate. It can be seen from FIG. 1 that sides of the outer liquid injection hole 4 and the inner liquid injection hole 3 close to the center of the cover plate are in a same straight line, which is characteristic of tangency. A thickness of the inner liquid injection hole 3 is equal to a thickness of the outer liquid injection hole 4, which is a half of a thickness of the cover plate. The thickness of the cover plate does not include a height of the liquid-injection-hole boss 7, and it is understood through FIG. 1 that the thickness of the cover plate does not include a raised part of the liquid-injection-hole boss 7. It should be specifically noted here that in this embodiment, a diameter of a circle formed by connecting centers of the four outer liquid injection holes 4 is 6 mm, and this circle is not marked in figures of the specification only for convenience of subsequent description of a size of the central welding groove 9. A diameter of the central welding groove 9 is 4 mm, a depth of the central welding groove 9 is the same as a depth of the welding groove 6, and the outer liquid injection holes 4 are located outside the central welding groove 9. The central groove 9 can be any geometric shape according to actual applications. In this embodiment, the central groove is circular in shape, with an area smaller than an area of the outer injection hole circle 8. A main purpose of the central welding groove 9 is to carry out penetration welding here, so as to weld the cover plate with a corresponding current collecting plate inside the battery cell. The penetration welding can be made in a spot mode, continuous line mode or other modes. In this embodiment, the penetration welding is spot welding. An outer liquid injection hole circle 8 is provided at the front surface of the cover plate, the outer liquid injection hole 4 is inscribed in the outer liquid injection hole circle 8, the central welding groove 9 and the outer liquid injection hole circle 8 are concentric, and a diameter of the central welding groove 9 is smaller than a diameter of the outer liquid injection hole circle 8.

The front surface of the cover plate is provided with a welding groove 6, which is annular in shape and is closer to the center of the cover plate than the outer explosion-proof groove 2, the outer liquid injection hole 4 is closer to the center of the cover plate than the welding groove 6, an opening of the welding groove 6 faces the front surface of the cover plate, a depth of the welding groove 6 is less than a thickness of the cover plate, and the welding groove 6 can be set in a circular, semi-circular or segmented arc shape. The welding groove 6 is characterized in that the opening of the welding groove 6 faces the front surface of the cover plate, and the depth of the welding groove 6 is between one-third and two-thirds of the thickness of the cover plate. In this embodiment, the depth of the welding groove 6 is set to a half of the thickness of the cover plate. The welding groove 6 can be set in a circular, semi-circular or segmented arc shape according to actual applications. A width of the welding groove 6 can be adjusted according to actual application needs. In this embodiment, the width of the welding groove 6 is set to 2 mm. The welding groove 6 mainly functions in external laser penetration welding after the cover plate is assembled. A main purpose of the penetration welding is to weld the cover plate to the current collecting plate inside the battery cell to achieve a function of electrical connection. The penetration welding can be made in a spot mode, continuous line mode or other modes. After welding, an external molten part is preferably not beyond an outer plane of the body of the cover plate. In this embodiment, the penetration welding is in the continuous line mode.

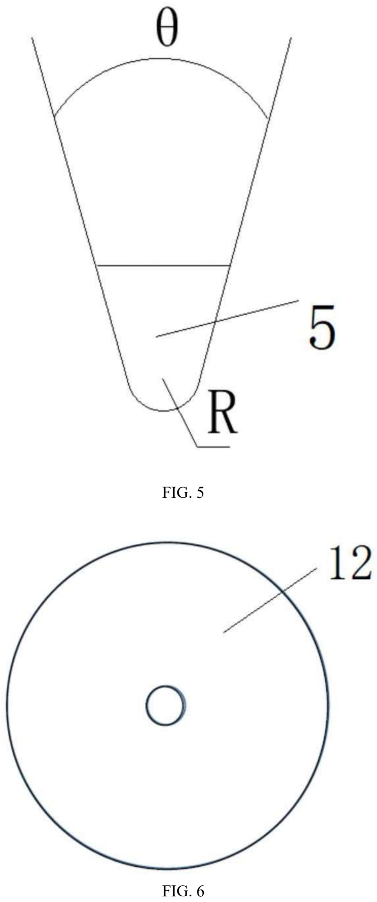

As can be seen from FIGS. 4 and 5, a main feature of the explosion-proof scribe line according to the present disclosure is that a depth of the explosion-proof scribe line 5 is set to be one fifth to two-thirds of a thickness of the outer explosion-proof groove 2, and in this embodiment, the depth of the explosion-proof scribe line 5 is a half of the thickness of the outer explosion-proof groove. It can be adjusted according to actual design needs of the battery cell. A cross section of the explosion-proof scribe line is a U-shaped opening, with an opening angle θ between 10 and 6 degrees. A bottom end of the cross section of the explosion-proof scribe line is arc-shaped, with an arc radius R being set between 0 .01 and 1. Values of θ and R can be adjusted according to the actual design needs. In this embodiment, the value of θ is set to 30 degrees, and the value of R is set to 0.03. U-shaped design of the explosion-proof scribe line can avoid cracks caused by an original V-shaped sharp corner during processing of the explosion-proof scribe line, and improve processing stability of the explosion-proof scribe line.

### Embodiment 2

This disclosure focuses on protecting the battery cover plate structure, but for convenience of understanding, this embodiment is used to illustrate a recommended assembly process sequence of the battery cover plate. Firstly, the cover plate is welded with the housing of the battery cell, after which the assembled winding core with a current collecting plate is placed into the housing, and then, the current collecting plate and the cover plate are pressed by an external pressure to ensure their full contact, and then the laser penetration welding is adopted to weld in the welding groove and outside the cover plate, and then the penetration welding is carried out at the central welding groove 9 of the cover plate, so that welding effect between the cover plate and the current collecting plate is fully ensured with these two weldings. Then the other end of the battery cell is assembled, after which liquid injection is carried out, and after liquid injection, seal-welding is performed using the sealing nail 12 to complete assembly of the whole cylindrical battery cell. Or firstly, the cover plate is laser welded with the winding core with the current collecting plate, which then are placed into the housing as a whole, and then the cover plate and the housing are welded.

In addition to above embodiments, technical features or technical data of the disclosure can be re-selected and combined to form new embodiments within the scope disclosed in the claims and specifications of the present disclosure, which can be realized by those skilled in the art without creative labor. Therefore, these embodiments not described in detail should also be regarded as specific embodiments of the disclosure and within the protection scope of the present disclosure.

## Claims

1. A battery cover plate structure, comprising an inner explosion-proof groove (1), wherein the inner explosion-proof groove (1) is annularly distributed on a back surface of a cover plate, the back surface of the cover plate is provided with a plurality of inner liquid injection holes (3) distributed circumferentially along the cover plate, an outer explosion-proof groove (2) is provided on a back surface of the inner explosion-proof groove (1), the outer explosion-proof groove (2) is annularly distributed, an explosion-proof scribe line (5) is provided at a center of the outer explosion-proof groove (2), a front surface of the cover plate is provided with a plurality of outer liquid injection holes (4) circumferentially distributed along the cover plate; and the plurality of inner liquid injection holes (3) are in one to one correspondence to the plurality of outer liquid injection holes (4).

2. The battery cover plate structure according to claim 1, wherein a depth of the explosion-proof scribe line (5) is less than a thickness of the outer explosion-proof groove (2), a cross section of the explosion-proof scribe line (5) is a U-shaped opening, an opening angle of the cross section of the explosion-proof scribe line (5) is more than or equal to 10 degrees and less than or equal to 60 degrees, and a bottom end of a cross section of the explosion-proof scribe line (5) is arc-shaped.

3. The battery cover plate structure according to claim **1,** wherein the front surface of the cover plate is provided with a welding groove (6) which is annular in shape and is closer to a center of the cover plate than the outer explosion-proof groove (2), the outer liquid injection hole (4) is closer to the center of the cover plate than the welding groove (6), an opening of the welding groove (6) faces the front surface of the cover plate, a depth of the welding groove (6) is less than a thickness of the cover plate, and the welding groove (6) is set in a circular, semi-circular or segmented arc shape.

4. The battery cover plate structure according to claim 1, wherein each of the plurality of inner liquid injection holes (3) is closer to the center of the cover plate than the inner explosion-proof groove (3), a diameter of the inner liquid injection hole (3) is larger than a diameter of the outer liquid injection hole (4), the outer liquid injection hole (4) is inscribed in the inner liquid injection hole (3), and the inner liquid injection hole (3) and the outer liquid injection hole (4) integrally form a through hole, and a sum of thicknesses of the inner liquid injection hole (3) and the outer liquid injection hole (4) is equal to the thickness of the cover plate.

5. The battery cover plate structure according to claim 3, wherein the front surface of the cover plate is provided with a liquid-injection-hole boss (7), the liquid-injection-hole boss (7) is closer to the center of the cover plate than the welding groove (6), and the outer liquid injection hole (4) is closer to the center of the cover plate than the liquid-injection-hole boss (7), and the liquid-injection-hole boss (7) is annular as a whole, and a cross section of the liquid-injection-hole boss (7) is a right-angled trapezoid in shape, and a hypotenuse of the right-angled trapezoid is located at a side close to the outer liquid injection hole (4), and a gap is left between the liquid-injection-hole boss (7) and the outer liquid injection hole (4).

6. The battery cover plate structure according to claim 3, wherein a central welding groove (9) is provided at a center of the front surface of the cover plate, a depth of the central welding groove (9) is same as a depth of the welding groove (6), and the outer liquid injection hole (4) is located at an outer side of the central welding groove (9).

7. The battery cover plate structure according to claim 6, wherein an outer liquid injection hole circle (8) is provided at the front surface of the cover plate, the outer liquid injection hole (4) is inscribed in the outer liquid injection hole circle (8), the central welding groove (9) and the outer liquid injection hole circle (8) are concentric, and a diameter of the central welding groove (9) is smaller than a diameter of the outer liquid injection hole circle (8).

8. The battery cover plate structure according to claim 1, wherein the cover plate is disc-shaped as a whole, and an edge groove (10) is provided at an edge of the back surface of the cover plate, the edge groove (10) is annular in shape and further away from the center of the cover plate than the inner explosion-proof groove (1).

9. The battery cover plate structure according to claim 5, wherein an annular inner wall of the liquid-injection-hole boss (7) forms a truncated cone structure (11), and the truncated cone structure (11) is provided with a sealing nail (12) matched with the truncated cone structure, and an edge of the sealing nail (12) is adapted to an edge of the truncated cone structure (11) in shape, and a thickness of the sealing nail (12) is less than a height of the liquid-injection-hole boss (7).
